# EUROPEAN PATENT SPECIFICATION

(11) **EP 0 567 474 B1**
(45) Date of publication and mention of the grant of the patent: **15.11.1995**
(21) Application number: 92901608.7
(22) Date of filing: 11.01.1992
(51) Int. Cl.: G07F 7/10, H04L 9/32

(54) **METHOD AND APPARATUS FOR ACCESS CONTROL AND/OR IDENTIFICATION**
VERFAHREN UND VORRICHTUNG ZUR ZUGRIFFSKONTROLLE UND/ODER ERKENNUNG
PROCEDE ET APPAREIL POUR LE CONTROLE ET/OU L'IDENTIFICATION D'ACCES

(30) Priority: 18.01.1991 EP 91400111
(43) Date of publication of application: 03.11.1993
(73) Proprietor: THOMSON multimedia, 92400 Courbevoie (FR)
(72) Inventor: NACCACHE, David, F-94700 Maisons-Alfort (FR)
(74) Representative: Einsel, Robert, Dipl.-Ing.
(86) International application number: PCT/EP92/00044
(87) International publication number: WO 92/13321

(56) References cited:
- EP-A- 0 325 238
- EP-A- 0 383 985
- EP-A- 0 384 475
- EP-A- 0 389 895
- WO-A-88/02899
- WO-A-89/11706
- US-A- 4 354 201
- S.GOLDWASSER (EDITOR) 'Lecture Notes in Computer Science - Advances in cryptology - CRYPTO '88 Proceedings' , SPRINGER-VERLAG , BERLIN An Improvement of the FIAT-SHAMIR Identification and Signature Scheme. (Adi Shamir & Silvio Micali)

## Description

The present invention relates to a method and to an apparatus for access control and/or identification which requires no public key directory.

### Background

For many applications, e.g. smart cards for pay TV purposes, credit cards, passports, dongels, military command and control systems, unforgeable systems for access control or digital signature are required.
Such access control and signature systems may include public keys. But in many public key identification and access control systems the key management becomes very complicated when the number of users increases. Typical problems are:
1) The memory size of the public directory;
2) An interaction with said directory is needed whenever users want to communicate (simultaneous access problems if the directory is not duplicated);
3) The blacklisting of invalid and old keys;
4) Adding a new member ('Allusers' update mail to the members);
5) Risks of forgery of the public directory (interchange of public keys between a victim member and a cheater). Entities might try to duplicate, playback or forge key identification devices (hereafter called 'identifiers', since they identify the carrying entity).

A famous solution to this problem of digital identification and signature has been developed in EP 0252499 and EP 0325238 by Fiat and Shamir. This method utilizes a trusted authority which issues said identifiers to eligible users. No further interaction with any center is required, neither to generate nor to verify identities and signatures. An unlimited number of users can join the system without statistically compromizing its security. Interactions with identifiers do not allow forgery (outlaw production of identifiers). No user or verifier directories are needed.

This method, which practically works well, has however some theoretical lacks which compromize its security.
The protocol, i.e. the flow scheme, which is disclosed in EP 0252499 and where
- U is an user, e.g. a smart card;
- V is a verifier;
- k is an integer number, e.g. in the range [1,18];
- r is a random integer number in the range [0,n);
- (e₁e₂e₃...eₖ) is a binary vector,

works in the following way:
An authority chooses a pseudo random function f and a modulus n = pq, where p and q are both secret primes, known only to said authority (A = B mod n is equivalent to mod (A,n) = mod (B,n) ).
In order to issue an identifier the authority:
1) prepares a string ID containing information which is unique to the entity U;
2) computes a set of values vⱼᵢ = f(ID,jᵢ) for small values of jᵢ;
3) selects k values of the vⱼᵢ which are quadratic residues mod n and computes the values sⱼᵢ such that
   sⱼᵢ² *vⱼᵢ = 1 mod n;
4) issues an identifier containing ID, j₁,j₂,...,jₖ, sⱼ₁,sⱼ₂,...,sⱼₖ and n.

The identity verification protocol with the verifier V proceeds then as follows:
1) U sends ID and j₁,j₂,...,jₖ to V;
2) V generates the vⱼᵢ by computing vⱼᵢ = f(ID,jᵢ) for i = 1,2,...,k;
3) U picks a random r and sends r² mod n to V;
4) V chooses a binary vector (e₁e₂e₃...eₖ) and sends it to U;
5) U multiplies r by each of the sⱼᵢ values, where bit eᵢ = 1, and sends the result y to V. This is stated by: 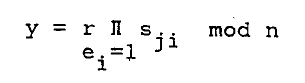 For example, if the binary vector is 1100100000, then only sⱼ₁, sⱼ₂ and sⱼ₅ influence y = r*sⱼ₁*sⱼ₂*sⱼ₅ mod n.
6) V checks that

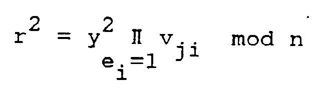

But different attacks can be carried out which compromize this protocol:
A) If an opponent discovers only one of the sⱼᵢ (say s_{jc}), then the whole system becomes vulnerable as described by the following scheme where U misrepresents himself successfully:
   - U sends ID and j_{c}, j_{c},...,j_{c} to V;
   - V generates k times the same v_{jc} since all the jᵢ are identical;
   - U picks a random r and sends r² mod n to V;
   - V chooses a binary vector (e₁e₂e₃...eₖ) and sends it to U;
   - U sends to V 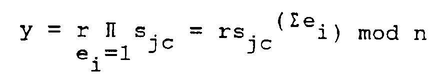
   - V checks that 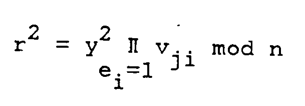
B) This attack is easier then the first one since mathematically it is easier to compute the inverse of one of the vⱼᵢ (say v_{jc}⁻¹) then the inverse root s_{jc}. If such a value is known then there is a probability of 0.5 to crack the above mentioned known identification system:
   - U sends ID and j_{c},j_{c},...,j_{c} to V;
   - V generates k times the same v_{jc} since all the jᵢ are identical;
   - U picks a random r and sends r² mod n to V;
   - V chooses a binary vector (e₁e₂e₃...eₖ) and sends it to U;
   - U sends to V${\text{y = r(v}}_{\text{jc}} \text{⁻¹)} {\text{}}^{{\text{int(Σe}}_{\text{i}} \text{/2)}} \text{mod n;}$
   - V checks that 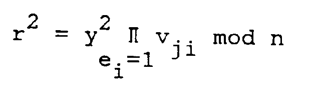
   This test will be true if Σeᵢ is even.
   If a pay TV verifier is public and available in any desired quantity, an opponent who uses simultaneously four verifiers, would obtain e.g. a TV program descrambled up to 94% by using attack B). If four supplementary verifiers would be added then this value is brought to 99.6% which results e.g. in a good image quality.
C) signature forgery
   This attack is the most dangerous since it allows any verifier to forge signatures from only public data as follows:
   - U sends ID and j_{c},j_{c},...,j_{c} to V;
   - V generates k times the same v_{jc} since all the jᵢ are identical;
   - U executes the following algorithm:

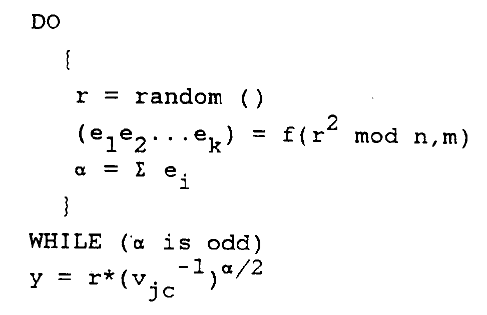

The probability not to discover such an r decreases exponentially following the law of 2^{-χ}. Typically, the probability to find a good r before x = 7 is about 99% (x is the number of iterations of the WHILE loop).
- U sends y together with (e₁e₂...eₖ) to V;
- V successfully compares 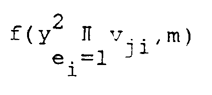 and (e₁e₂...eₖ).

The weakness resides in the fact that the vⱼ values are considered as k different secrets and therefore forging a part of them (here 1/18, k = 18) compromizes the security of the scheme.

### Invention

It is one object of the invention to disclose a method for improving the security of an access control system. This object is reached by the inventive method disclosed in claim 1.

A second object of the invention is to allow the introduction of data from previous communications between user and verifier to the next ones thereby improving the security even more (claim 10).

Advantageous embodiments of the inventive method are resulting from the respective dependent claims.

It is a further object of the invention to disclose an apparatus. This object is reached by the inventive apparatus disclosed in claims 16 and 17.

Advantageous additional embodiments of the inventive apparatus are resulting from the respective dependent claims.

The invention uses the fact that it is difficult to compute square roots mod n when factoring of n is unknown. The invention is based on the identity:$\text{x²{r(x+x⁻¹)}² = r²{1+x²}² mod n}$
which is computed and compared using a user unit and a verifier unit. This equation is very hard to solve and to imitate by an unauthorized user from only public and transmitted data.
Advantageously equation (1) can be generalized to:${\text{x}}^{\text{ε}} {\text{{r(ax+bx⁻¹)}}}^{\text{ε}} {\text{= r}}^{\text{ε}} {\text{{b+ax²}}}^{\text{ε}} \text{mod n}$
in order to increase protection and to introduce more noise into the communicated data as explained below.

The technique described in this invention solves all the above mentioned problems in a simple way. The algorithm which requires the public directory (hereafter referred to as 'host algorithm' or 'host protocol') uses a modulus n which is the product of at least two big primes. The known public key directory is replaced by a unique transmission between an authority or a sender S and a receiver R of a 'seed' which will give after a proper processing both the identity information for R and public keys. This method we call 'Virtual Public Key Directory' or 'VPKD' for short. Advantageously the VPKD can be standarized and introduced to any security protocols requiring public moduli.
New users can join the system without informing other users and verifiers and without compromizing the security of the system nor reducing its performance. Only the authority must know the factoring of n and will provide seeds.
Typically a VPKD will precede the host protocol. In practice this can be understood as a preliminary secure communication that will give R public data signed by the authority S. This is illustrated in Fig. 7. The evolution of knowledge between R and S is depicted in Fig. 8 for an identification system, in Fig. 9 for an access control system and in Fig. 10 for a digital signature system.

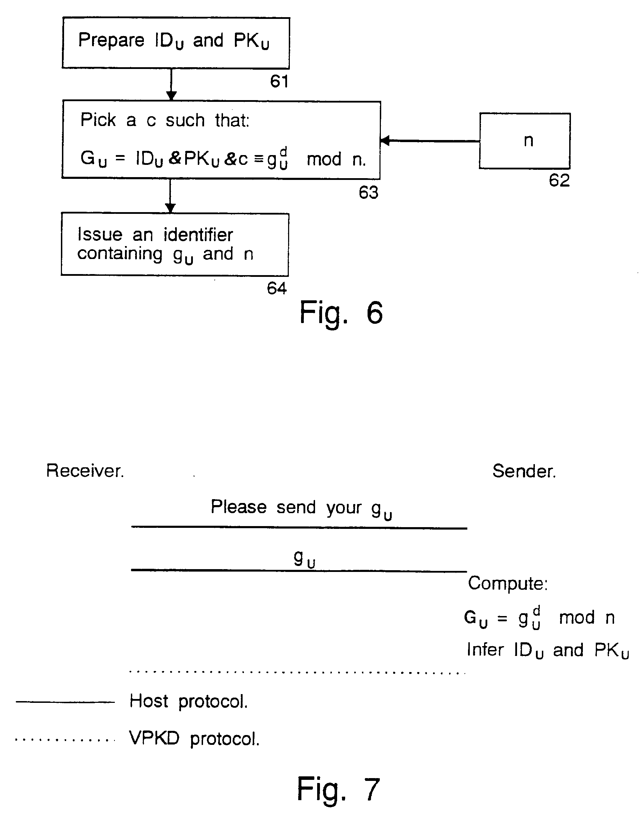

Fig. 6 explains the construction of a VPKD pre-protocol device. In order to register a new user U the authority computes a public key PK_{U} in such a way that PK_{U} < n (this restriction can be removed if PK_{U} is sliced to the right size as this is commonly done in modulo-based crypto systems) and prepares a string IDU which is unique to the physical entity U or to a given group of members and contains e.g. name, address, credit card number, date of validity. This can be done by a first unit 61. A second unit 62, e.g. a memory, contains the value n. Then the center concatenates within a third unit 63 ID_{U} and PK_{U} with a well chosen byte c such that ID_{U}&PK_{U}&c has a d-th root modulo n (& stands for the concatenation operator).

We denote this root g_{U}. g_{U} is defined by G_{U}=g_{U}^{d} mod n where G_{U}=ID_{U}&PK_{U}&c. At manufacturing g_{U}, ID and n are recorded on a retrieval medium 64 of the identifier U.
When S interacts with U, it sends g_{U} to U which computes G_{U} by raising g_{U} to the power d, then ID_{U} and PK_{U} are separated and used by the host protocol.
In a typical implementation a value d=2 or d=3 may be chosen.

This method can be generalized in a variety of ways:
1) The order of ID, PK, and c in G can be permuted. A norma-lization will appear to be good in practice since the VPKD can be used by all different modulo based algorithms requiring public key transmissions;
2) Public or secret reversible functions for mixing and separating ID, PK and c can be used instead of simple concatenation, e.g. compression, permutation or even recurrent nested VPKD;
3) In schemes requiring k different public key values PK_{U1},PK_{U2},PK_{U3},...,PK_{Uk} (for each user U), which can be permuted without compromizing the functionality of the scheme (concerning the known identification system where all the vⱼ play the same role provided that for each sⱼ²vⱼ = 1 mod n), the use of c can even be avoided by permuting:${\text{ID}}_{\text{U}} {\text{&PK}}_{\text{U1}} {\text{&PK}}_{\text{U2}} {\text{&PK}}_{\text{U3}} {\text{&...&PK}}_{\text{Uk}} {\text{= G}}_{\text{U,1}} \text{;} {\text{ID}}_{\text{U}} {\text{&PK}}_{\text{U2}} {\text{&PK}}_{\text{U1}} {\text{&PK}}_{\text{U3}} {\text{&...&PK}}_{\text{Uk}} {\text{= G}}_{\text{U,2}} \text{;} \text{:} \text{:} \text{:} {\text{ID}}_{\text{U}} {\text{&PK}}_{\text{Uk}} {\text{&...&PK}}_{\text{U3}} {\text{&PK}}_{\text{U2}} {\text{&PK}}_{\text{U1}} {\text{= G}}_{\text{U,k!}} \text{,}$ until a G_{U,µ} which is a d-th power mod n is found. The probability to find no good G_{U,µ} is only${\text{(3/4)}}^{\text{18!}} {\text{< 10}}^{\text{(-ex)}} \text{, ex = 10¹⁴ ;}$
4) Checksums, random 'one way' functions, CRCs (cyclic redundancy check) and other mathematical methods can be included in G (e.g. f(ID,PK) where f maps long strings to few bytes) or in systems where a group (or all the entities) has the same ID (or no ID at all), ID can be eliminated or replaced by a constant. This is an interesting perspective in pay TV systems in which it is often desirable to address groups of subscribers.
5) ID and/or the PK can be transmitted in a plain or enciphered way along with the corresponding g in order to increase the security;
6) The simple exponentiation of g can also be replaced by a polynomial computation. For doing so the authority publishes a sequence of numbers Ωᵢ and computes g_{U} in such a way that

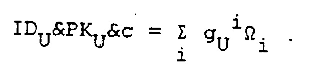

The simplicity, security and speed of the method and the apparatus derive from microprocessor-based techniques which may be incorporated into smart cards, personal computers, dongles, passports and other remote systems, e.g. for pay TV purposes.

### Drawings

Preferred embodiments of the invention will now be described with reference to the accompanying drawings, in which:

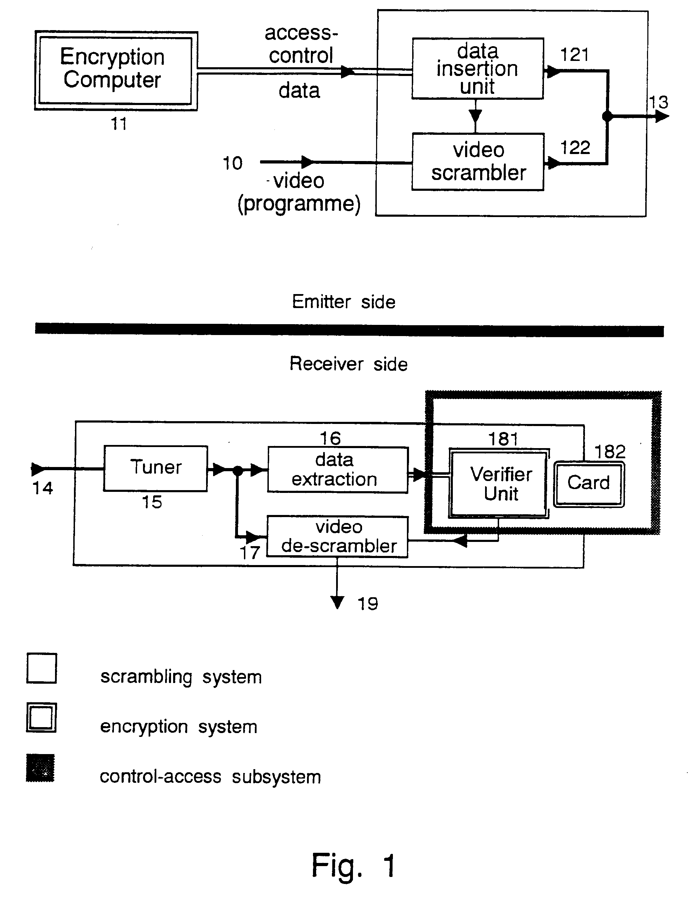

- Fig. 1: shows a pay TV system with scrambling and encrypting units;

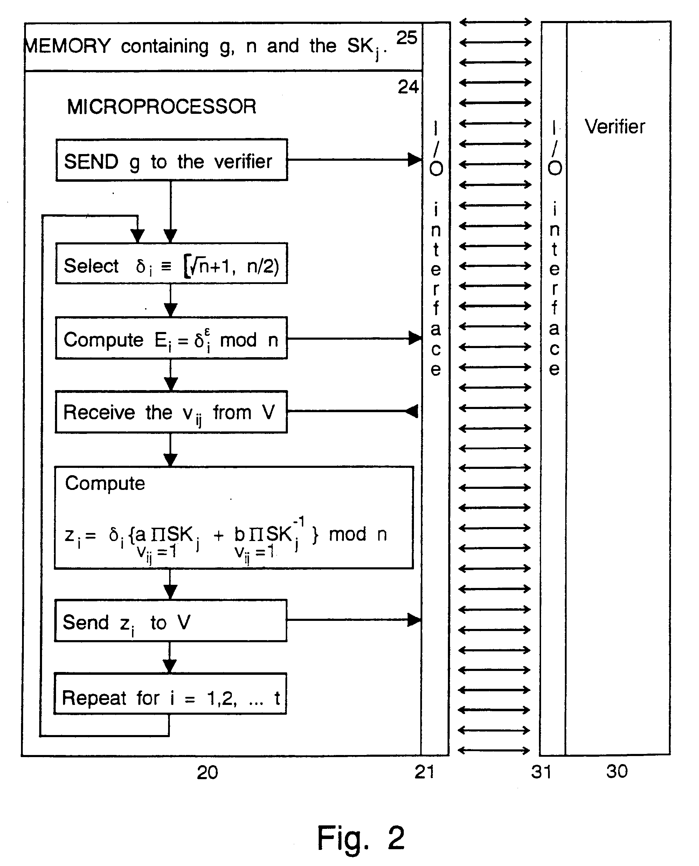

- Fig. 2: shows the hardware and software structure of an identifier U (smart-card);

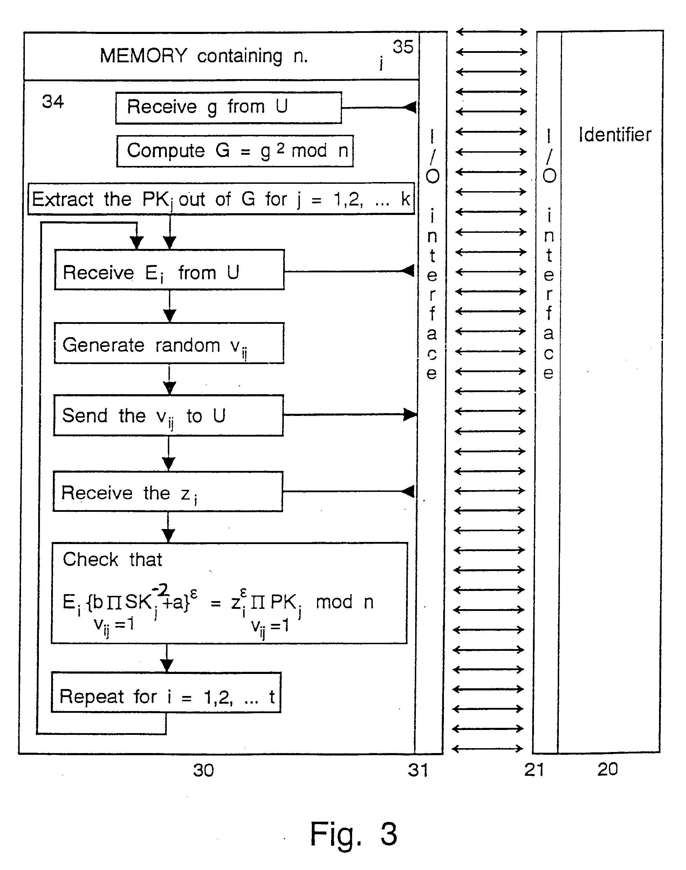

- Fig. 3: shows the hardware and software structure of a verifier V;

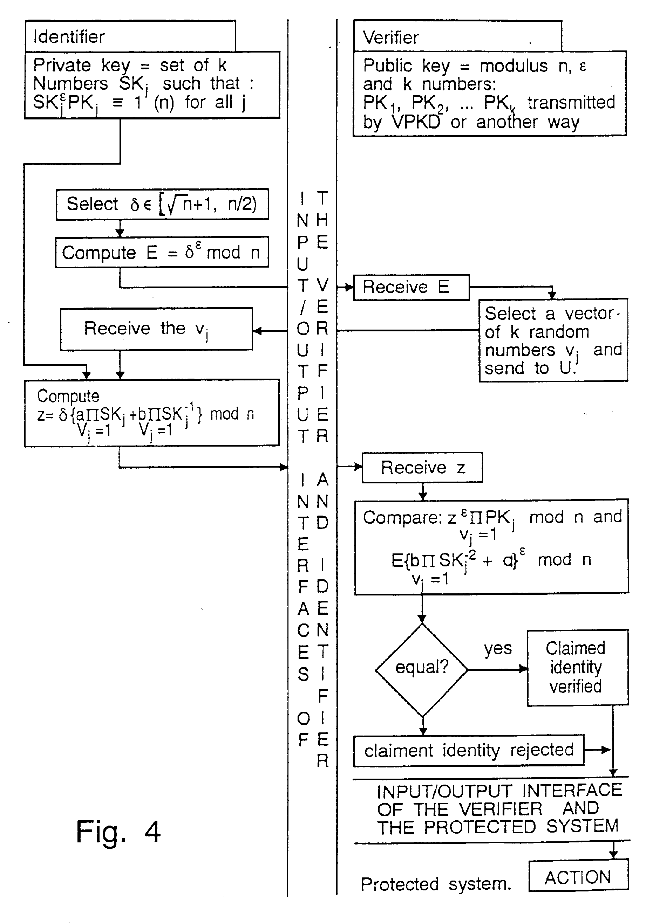

- Fig. 4: shows an authentication protocol between a signer (smart card) and a verifier (identity control device) containing no secrets;

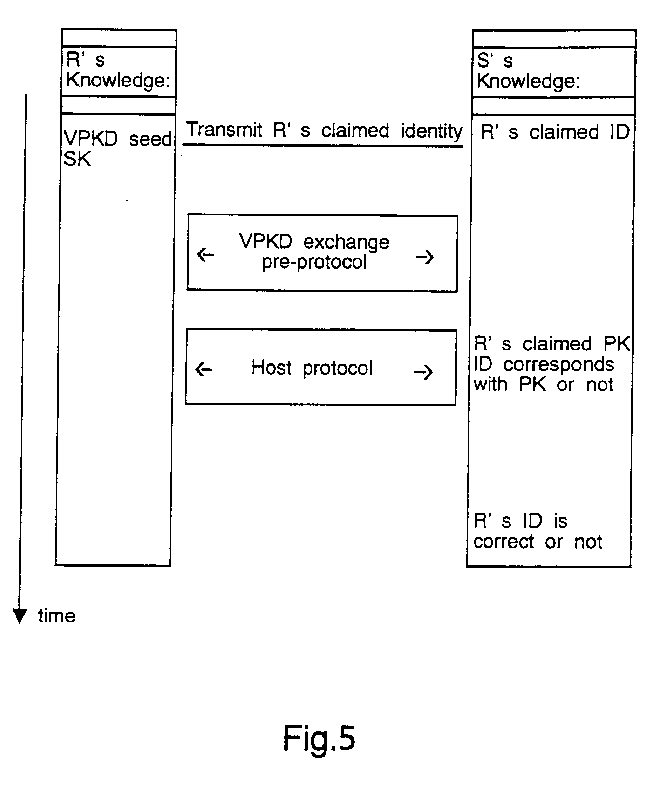

- Fig. 5: illustrates a typical chronological evolution of knowledge detained by R and S in a communication involving a VPKD pre-protocol and an access control algorithm;
- Fig. 6: shows the construction process of a VPKD preprotocol apparatus;
- Fig. 7: shows a VPKD pre-protocol and a host protocol;

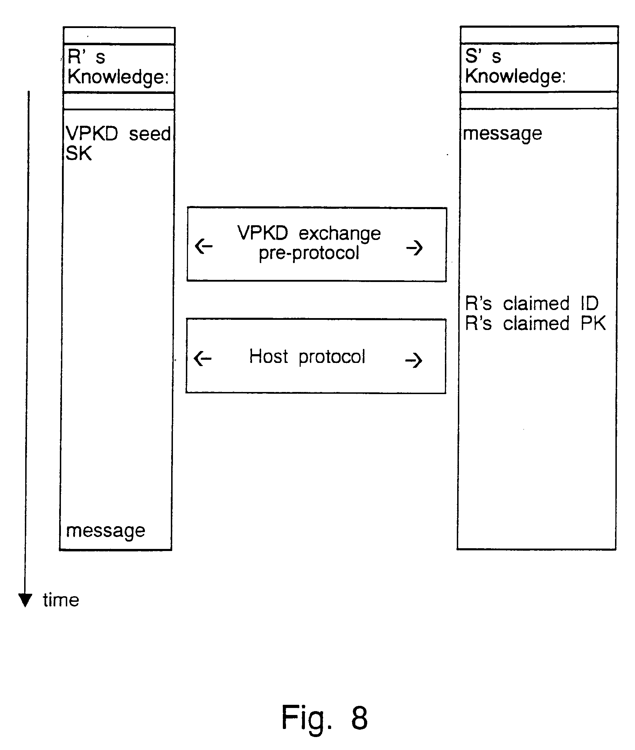

- Fig. 8: illustrates a typical chronological evolution of knowledge detained by R and S in a communication involving a VPKD pre-protocol and an identification algorithm.

### Preferred embodiments

Satellite broadcasters are now using conditional access systems to ensure that TV programmes are available only to viewers who have fulfilled certain conditions, such as payment.
Such a pay TV system may be considered as consisting of two parts:
- the scrambling system which processes the video signal in such a way, e.g. by a line cut and rotate method, that the received picture can not be recognized by unauthorized viewers;
- the encryption system which processes key signals needed to descramble the video signal.

Fig.1 shows a known pay TV system, e.g. the Videocrypt system. The incoming studio video signal 10 is scrambled in a video scrambler 122 which is controlled by a data insertion unit 121. This data insertion unit receives access control data from an encryption computer 11 and inserts in the vertical blanking interval of the video signal data which allow an authorized decoder to descramble the video signal. The RF modulated output signal 13 of the emitter side is the input signal 14 at the receiver side.
This input signal becomes demodulated in a tuner 15 and is fed to a data extraction unit 16 and to a video descrambler 17. The access control data out of data extraction circuit are evaluated in a verifier unit 181 if a smart card 182 is inserted. The output signal of the verifier unit controls the video descrambler 17.
The lines of the video signal which shall be scrambled consist of a first segment and a second segment. These two segments are separated by a cut point cp. There are e.g. 256 different cut points within each line available. A whole line may consist of 958 samples of the digitized luminance and chrominance signal, respectively.
The cut point is defined at each line by a pseudo-random binary sequence (PRBS). The two line segments then become rotated within the line, i.e. they change their position within the line. The according location of the cut point cp varies respectively within the lines of each TV picture. It is the task of the descrambling system in the receiver to restore the original positions of the two segments. The encrypted data necessary to do this job may be inserted in the vertical blanking interval.
In order to descramble the TV signal the decoders include the same PRBS generator (in verifier unit 181) as the emitter (in encrypting computer 11). Both generators are initialized with the same control binary sequence, e.g. a control word. This control word is changed every few seconds and transmitted in encrypted form simultaneously to all the decoders.
The PRBS generator may output two 8 bit words. These words can mark the cut points cp in a luminance and in a chrominance line, respectively, as follows:

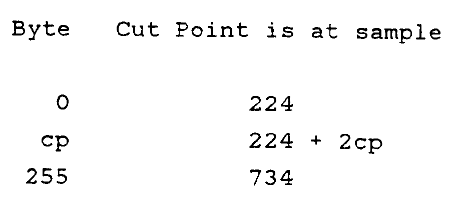

Before issuing identifiers, the authority chooses and makes public a modulus n and a power ε (typically ε=2) known to all those who might have to check identities or signatures.
Then the center (i.e. the authority) produces for all the authorized members VPKD devices, containing k small (typically between 1 and 5 bytes) public key values PKⱼ so that each PKⱼ has ε-roots mod n (hereafter denoted SKⱼ⁻¹) whereby PKⱼ is not a perfect square in N. If possible, prime PKⱼ values must be chosen.
In implementations where ε#2 (not equal) means for communicating SKⱼ⁻² to V must be found as well (VPKD, public directory, etc.). When this is done the authority records on a retrievable medium of the identifier U, containing g, n, ε and the respective SKⱼ values.

For a typical implementation the following values are suggested:
- twenty values PK of 2 bytes each;
- a 128-bit ID and a 8-byte checksum on ID&PK₁&PK₂&...&PK₂₀;
- |n| = 512 bits.

Optionally, one can add into the identifier a couple of any algebraic or electronic functions a and b as indicated in equation (2). But if this is done a and b must as well be known to the verifiers. Advantageously in typical small implementations (e.g. smart-cards) both, a and b, are constants with a value '1', but in a more powerful system (e.g. dongle) a and b can be any couple of functions.

A typical access control implementation is depicted in Fig. 2 and Fig. 3. A smart-card 20 (i.e. the identifier U) is connected with its I/O interface 21 to the I/O interface 31 of a verifier unit 30. Smart-card 20 contains e.g. a microprocessor 24 and a memory 25, e.g. a ROM. This memory may contain the values g, n, SKⱼ and a program for controlling microprocessor 24. The verifier unit 30 may also contain a microprocessor 34 and a memory 35, e.g. a ROM. This memory may contain the value n and a program for controlling microprocessor 34.
When said identifier interacts with said verifier the following steps are carried out:
1) The identifier U sends g to V (and SK₁⁻², SK₂⁻², ..., SKₖ⁻² if ε#2 and if this data is not transmitted or known to V by another way);
2) V computes g² mod n and finds G = ID&PK₁&PK₂&...&PKₖ. Then V separates ID and the PK values found in g² mod n.
3) U picks a random δ in the range [√n+1,n/2), computes E = δ^{ε} mod n and sends E to V;
4) V selects a random binary vector v = (v₁v₂...vₖ) and sends it to U;
5) Optional - only if a and b are used: Both, V and U, prepare an identical value Ω (e.g. from v, δ, previously transmitted information, etc);
6) U computes 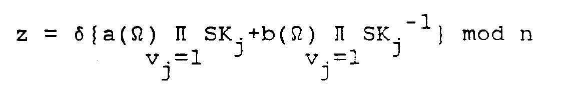 and sends z to V;
7) V checks that 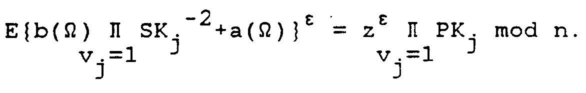
8) Repeating steps (3) through (7) at least once.

This protocol can be modified in a variety of ways. Namely a variety of polynomial identities can be used instead of equation (1).
Fig. 4 shows the according authentication protocol.

Supplementary improvements according to the invention are:
1) No pseudo random functions are needed. This requires lower memory capacity (in ROM) and program complexity.
2) All the public key values are computed with a substantial gain in time by a unique computation, whereas in known identification schemes k independent operations, namely f(ID,j), must be carried out.
3) The known pseudo random function f gives vⱼ of unforeseeable sizes whereas according to the invention it is allowed to choose any (PKⱼ, SKⱼ) couple and particularly such couples where both, SKⱼ and PKⱼ, are of small size.
4) In case of upgrading the known identification system (changements in function f), all the old identifiers become obsolete. Within the invention this problem does not exist since no function f is used.

The authentication protocol or digital signature protocol of Fiat-Shamir mentioned above can also be improved if additional security tests performed by the verifier are carried out after the reception of the indices jᵢ from the prover. These security tests are that for all
1≦a≦k, jₐ not equal j_{b},
and/or
1≦a<b≦k, vₐ not equal v_{b}.

## Claims

1. Method for access control or identification - especially in a pay TV system - wherein for authorising one user or a plurality of users (denoted U) - e.g. smart cards (182) - an authority (11) calculates ID data unique to each U or a group of U and provides U with hidden data depending on said ID data and having been calculated mod n, and wherein for verifying U's identity U exchanges at least a part of said hidden data with verifier means (denoted V) - e.g. a smart card reader (181) - which check the validity of the data exchanged on a mod n basis, wherein n is a product of at least two prime numbers, **characterised in** the following authorising steps which are performed in an initial user set-up:
a) said authority combines (63) said ID data with a public key PKⱼ and a byte c in such a way that the resulting combined number G has a d-th root g mod n, i.e. G = g^{d} mod n, and wherein each PKⱼ has ε-roots mod n, denoted as SKⱼ⁻¹;
b) at minimum g and n are recorded (25, 64) in U, and in the following verifying steps:
c) U sends at minimum g to V;
d) V computes (34) G = g² mod n and separates from G said ID data and the public key values PKⱼ;
e) U selects a random number δ in the range [√n +1,n/2); and computes (24) a value E = δ^{ε} mod n and sends value E to V;
f) V selects a random binary vector v = (v₁v₂...vₖ) and sends this vector to U;
g) U computes (24) 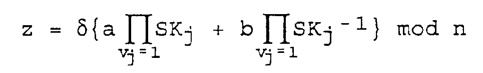 and sends z to V;
h) V checks (34) , if 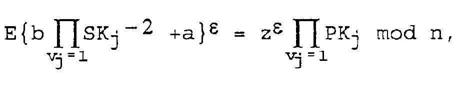 wherein ε=2 or ε=3 and a and b are a constant, especially a=b=1.

2. Method according to claim 1, **characterised in** that ε > 2 and V receives in addition the values SKⱼ⁻², especially via U in which these values have been recorded.

3. Method according to claim 1 or 2, **characterised in** that in step a) of claim 1 said byte c is omitted and the combination of ID and PK is permuted until G is a d-th power mod n.

4. Method according to any of claims 1 to 3, **characterised in** that d has a value of d=2 or d=3.

5. Method according to any of claims 1 to 4, **characterised in** that for forming G, ID and PK and/or c are combined (63) to ID&PK&c, wherein & is the concatenation operator.

6. Method according to any of claims 1 to 5, **characterised in** that ID is a constant.

7. Method according to any of claims 1 to 6, **characterised in** that the exponentiation of g is replaced by a polynomial computation, wherein the authority uses a sequence of public numbers Ωᵢ and computes g in such a way that

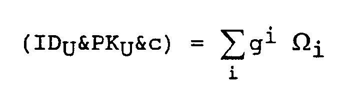

8. Method according to any of claims 1 to 7, **characterised in** that a and b are algebraic or electronic functions.

9. Method according to any of claims 1 to 8, **characterised in** that the number of bits of said number n is in the range 450 to 570.

10. Method according to any of claims 1 to 9, **characterised in** that U and V generate a value Ω, e.g. from said random binary vector v and/or from said random number δ and/or from data and/or numbers resulting from previous calculations, and that in claim 1 steps g) and h) are modified to:
g) U computes (24) 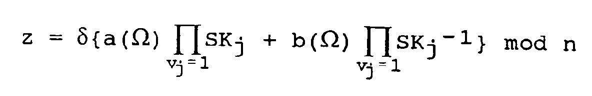 and sends z to V;
h) V checks (34), if

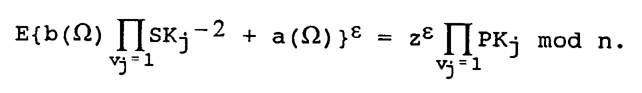

11. Method according to any of claims 1 to 10, **characterised in** that steps e) to h) are repeated t times with different random binary vectors v and/or random numbers δ, t≧1.

12. Method according to claim 11, **characterised in** that t has a value of at least t=4.

13. Method according to any of claims 1 to 12, **characterised in** that a set of at least k=18 key values PKⱼ is used.

14. Method according to any of claims 11 to 13, **characterised in** that the product k*t has a value in the range of 64 to 80.

15. Method according to any of claims 1 to 14, **characterised in** that said steps e) to h) are carried out using binary or trinary logic signals.

16. Apparatus for access control or identification - especially in a pay TV system - acting as a user U - e.g. a smart card (182) - which has been authorised by an authority (11) having calculated ID data unique to each U or a group of U and having provided U with hidden data depending on said ID data which are calculated mod n, and wherein for verifying U's identity U exchanges at least a part of said hidden data with verifier means (denoted V) - e.g. a smart card reader (181) - which check the validity of the data exchanged on a mod n basis, wherein n is a product of at least two prime numbers, **characterised in** that said ID data are combined with a public key PKⱼ and a byte c in such a way that the resulting combined number G has a d-th root g mod n, i.e. G = g^{d} mod n, and wherein each PKⱼ has ε-roots mod n, denoted as SKⱼ⁻¹, and that at minimum g and n are recorded in memory means (25) in U,
the apparatus further comprising calculating means (24) and I/O means (21), wherein for verifying
i) U sends via said I/O means at minimum g to V;
j) U selects a random number δ in the range [√n +1,n/2); and computes (24) a value E = δ^{ε} mod n and sends via said I/O means value E to V;
k) U receives via said I/O means from V a random binary vector v = (v₁v₂...vₖ);
l) U computes (24) 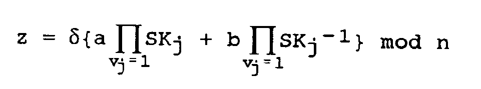 and sends z via said I/O means to V,
wherein ε=2 or ε=3 and a and b are a constant, especially a=b=1.

17. Apparatus for access control or identification - especially in a pay TV system - acting as a verifier V - e.g. a smart card reader (181) - which verifies the identity of a user U - e.g. a smart card (182) - which has been authorised by an authority (11) having calculated ID data unique to each U or a group of U and having provided U with hidden data depending on said ID data which are calculated mod n, and wherein V and U exchange at least a part of said hidden data and check the validity of the data exchanged on a mod n basis, wherein n is a product of at least two prime numbers, **characterised in** that said ID data are combined with a public key PKⱼ and a byte c in such a way that the resulting combined number G has a d-th root g mod n, i.e. G = g^{d} mod n, and wherein each PKⱼ has ε-roots mod n, denoted as SKⱼ⁻¹, and that at minimum n is recorded in memory means (35) in V,
the apparatus further comprising calculating means (34) and I/O means (31), wherein for verifying
m) V receives via said I/O means at minimum g from U and computes (34) G = g² mod n and separates from G said ID data and the public key values PKⱼ;
n) V receives from U via said I/O means a value E = δ^{ε} mod n and selects a random binary vector v = (v₁v₂...vₖ) and sends it via said I/O means to U;
o) V receives from U via said I/O means 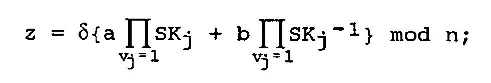 and checks, if 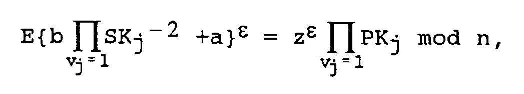
wherein ε=2 or ε=3 and a and b are a constant, especially a=b=1.

18. Apparatus according to claim 16 or 17, **characterised in** that the number of bits of said number n is in the range 450 to 570.

19. Apparatus according to any of claims 16 to 18, **characterised in** that steps j) to l) and n) to o) are repeated t times with different random binary vectors v and/or random numbers δ, t≧1.

20. Apparatus according to claim 19, **characterised in** that t has a value of at least t=4.

21. Apparatus according to any of claims 16 to 21, **characterised in** that steps j) to l) and n) to o) are carried out using binary or trinary logic signals.

## Patentansprüche

1. Verfahren zur Zugriffskontrolle oder Identifizierung - besonders in einem Gebührenfernsehsystem -, in dem, um einen Benutzer oder eine Mehrheit von Benutzern (mit U bezeichnet) - z.B. Chipkarten (182) - zu authorisieren, eine Authorität (11) ID-Daten, die ausschließlich auf jedes U oder eine Gruppe von U zutreffen, berechnet und an U versteckte Daten liefert, die von besagten ID-Daten abhängen und im mod n berechnet worden sind, und in dem U, zum Überprüfen der Kennung von U, mindestens einen Teil der besagten versteckten Daten mit Überprüfungsmitteln (als V bezeichnet) - z.B. ein Chipkartenleser (181)- austauscht, die die Gültigkeit der auf der Basis mod n ausgetauschten Daten überprüfen, bei dem es sich bei n um ein Produkt aus mindestens zwei Primzahlen handelt, gekennzeichnet durch die folgenden Authorisierungsschritte, die bei einer Ersteinrichtung des Benutzers durchgeführt werden:
a) besagte Authorität verknüpft (63) besagte ID-Daten mit einem öffentlichen Schlüssel PKⱼ und einem Byte c derart, daß die resultierende verknüpfte Zahl G eine d-te Wurzel g mod n aufweist, d.h. G = g^{d} mod n, und wobei jedes PKⱼ ε-Wurzeln mod n aufweist, die als SKⱼ⁻¹ bezeichnet sind;
b) mindestens g und n werden in U aufgezeichnet (25, 64),
und durch die folgenden Überprüfungsschritte:
c) U sendet mindestens g an V;
d) V berechnet (34) G = g² mod n und trennt besagte ID-Daten und die PKⱼ-Werte des öffentlichen Schlüssels von G;
e) U wählt eine Zufallszahl δ im Bereich [√n + 1,n/2] aus; und berechnet (24) einen Wert E = δ^{ε} mod n und sendet den Wert E an V;
f) V wählt einen binären Zufallsvektor v = (v₁v₂...vₖ) aus und sendet diesen Vektor an U;
g) U berechnet (24) 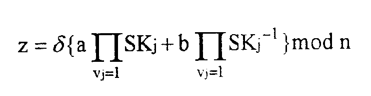 und sendet z an V;
h) V prüft (34), ob 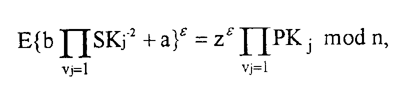
wobei ε = 2 oder ε = 3 ist und es sich bei a und b um eine Konstante handelt, insbesondere a = b = 1.

2. Verfahren nach Anpruch 1, dadurch gekennzeichnet, daß ε > 2 und V zusätzlich die Werte SKⱼ⁻² erhält, insbesondere über U, in dem diese Werte aufgezeichnet worden sind.

3. Verfahren nach Anspruch 1 oder 2, dadurch gekennzeichnet, daß in Schritt a) von Anspruch 1 besagtes Byte c ausgelassen ist und die Verknüpfung von ID und PK solange permutiert wird, bis G eine d-te Potenz mod n ist.

4. Verfahren nach einem der Ansprüche 1 bis 3, dadurch gekennzeichnet, daß d einen Wert von d=2 oder d=3 aufweist.

5. Verfahren nach einem der Ansprüche 1 bis 4, dadurch gekennzeichnet, daß, zur Bildung von G, ID und PK und/oder c zu ID&PK&c verknüpft (63) werden, wobei das & den Verkettungsoperator darstellt.

6. Verfahren nach einem der Ansprüche 1 bis 5, dadurch gekennzeichnet, daß es sich bei ID um eine Konstante handelt.

7. Verfahren nach einem der Ansprüche 1 bis 6, dadurch gekennzeichnet, daß die Potenzierung von g durch eine Polynom-Berechnung ersetzt wird, wobei die Authorität eine Folge öffentlicher Zahlen Ωᵢ verwendet und g derart berechnet, daß

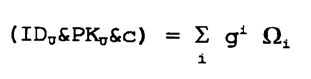

8. Verfahren nach einem der Ansprüche 1 bis 7, dadurch gekennzeichnet, daß es sich bei a und b um algebraische oder elektronische Funktionen handelt.

9. Verfahren nach einem der Ansprüche 1 bis 8, dadurch gekennzeichnet, daß die Anzahl von Bits von besagter Zahl n im Bereich von 450 bis 570 liegt.

10. Verfahren nach einem der Ansprüche 1 bis 9, dadurch gekennzeichnet, daß U und V einen Wert Ω erzeugen, z.B. aus besagtem binären Zufallsvektor V und/oder aus besagter Zufallszahl δ und/oder aus Daten und/oder Zahlen, die aus vorangegangenen Berechnungen resultieren, und daß in Anspruch 1 die Schritte g) und h) abgewandelt werden zu:
g) U berechnet (24) 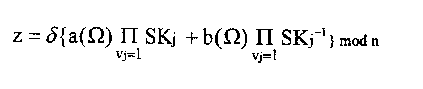 und sendet z an V;
h) V prüft (34), ob

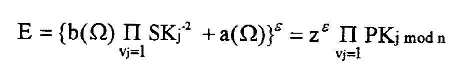

11. Verfahren nach einem der Ansprüche 1 bis 10, dadurch gekennzeichnet, daß Schritte e) bis h) mit verschiedenen binären Zufallsvektoren v und/oder Zufallszahlen δ, wobei t≧1 ist, t-mal wiederholt werden.

12. Verfahren nach Anspruch 11, dadurch gekennzeichnet, daß t einen Wert von mindestens t=4 aufweist.

13. Verfahren nach einem der Ansprüche 1 bis 12, dadurch gekennzeichnet, daß eine Menge von mindestens k=18 Schlüsselwerten PKⱼ verwendet wird.

14. Verfahren nach einem der Ansprüche 11 bis 13, dadurch gekennzeichnet, daß das Produkt k*t einen Wert im Bereich von 64 bis 80 aufweist.

15. Verfahren nach einem der Ansprüche 1 bis 14, dadurch gekennzeichnet, daß besagte Schritte e) bis h) unter Verwendung binärer oder trinärer logischer Signale ausgeführt werden.

16. Vorrichtung zur Zugriffskontrolle oder Identifizierung - besonders in einem Gebührenfernsehsystem - das als ein Benutzer U handelt - z.B. eine Chipkarte (182) - die von einer Authorität (11) authorisiert worden ist, nachdem sie ID-Daten, die ausschließlich auf jedes U oder eine Gruppe von U zutreffen, berechnet und an U versteckte Daten geliefert hat, die von besagten ID-Daten abhängen und im mod n berechnet worden sind, und in der U, zum Uberprüfen der Kennung von U, mindestens einen Teil der besagten versteckten Daten mit Überprüfungsmitteln (als V bezeichnet) - wie z.B. einem Chipkartenleser (181) - austauscht, die die Gültigkeit der auf der Basis mod n ausgetauschten Daten überprüfen, bei der es sich bei n um ein Produkt aus mindestens zwei Primzahlen handelt, dadurch gekennzeichnet, daß besagte ID-Daten mit einem öffentlichen Schlüssel PKⱼ und einem Byte c derart verknüpft werden, daß die resultierende verknüpfte Zahl G eine d-te Wurzel g mod n aufweist, d.h. G = g^{d} mod n, und wobei jedes PKⱼ ε-Wurzeln mod n aufweist, die als SKⱼ⁻¹ bezeichnet sind und daß mindestens g und n in Speichermitteln (25) in U aufgezeichnet werden, wobei die Vorrichtung weiterhin Berechnungsmittel (24) und E/A-Mittel (21) umfaßt, wobei zum Überprüfen
i) U mindestens g über besagte E/A-Mittel an V sendet;
j) U eine Zufallszahl δ im Bereich [√n + 1, n/2] auswählt, und einen Wert E = δ^{ε}' mod n berechnet (24) und den Wert E über besagte E/A-Mittel an V sendet;
k) U von V über besagte E/A-Mittel einen binären Zufallsvektor v = (v₁v₂...vₖ)empfängt;
l) U 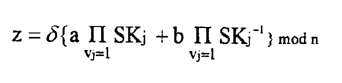
berechnet (24) und z über besagte E/A-Mittel an V sendet,
wobei ε = 2 oder ε = 3 ist und es sich bei a und b um eine Konstante handelt, insbesondere a = b = 1.

17. Vorrichtung zur Zugriffskontrolle oder Identifizierung - besonders in einem Gebührenfernsehsystem -, die als ein Überprüfer V handelt - z.B. ein Chipkartenleser (181) - der die Kennung eines Benutzers U - z.B. einer Chipkarte (182) überprüft, die von einer Authorität (11) authorisiert worden ist, nachdem sie ID-Daten, die ausschließlich auf jedes U oder eine Gruppe von U zutreffen, berechnet und an U versteckte Daten geliefert hat, die von besagten ID-Daten abhängen, die in mod n berechnet sind, und in der V und U mindestens ein Teil der besagten versteckten Daten austauschen und die Gültigkeit der auf der Basis mod n ausgetauschten Daten überprüfen, bei der es sich bei n um ein Produkt aus mindestens zwei Primzahlen handelt, dadurch gekennzeichnet, daß besagte ID-Daten mit einem öffentlichen Schlüssel PKⱼ und einem Byte c derart verknüpft werden, daß die resultierende verknüpfte Zahl G eine d. Wurzel g mod n aufweist, das heißt G = g^{d} mod n, und wobei jedes PKⱼ ε-Wurzeln mod n aufweist, die als SKⱼ⁻¹ bezeichnet sind, und daß mindestens n in Speichermitteln (35) in V aufgezeichnet wird, wobei die Vorrichtung weiter Berechnungsmittel (34) und E/A-Mittel (31) aufweist, wobei zum Überprüfen
m) V über besagte E/A-Mittel mindestens g von U empfängt und G = g² mod n berechnet (34) und besagte ID-Daten und die PKⱼ-Werte des öffentlichen Schlüssels von G trennt;
n) V von U über besagte E/A-Mittel einen Wert E = δ⁻ mod n erhält und einen binären Zufallsvektor v = (v₁v₂...vₖ) auswählt und ihn über besagte E/A-Mittel an U sendet;
o) V von U über besagte E/A-Mittel 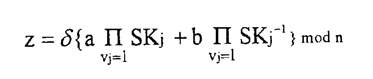
empfängt und prüft, ob 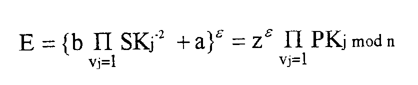 wobei ε = 2 oder ε = 3 ist und es sich bei a und b um eine Konstante handelt, insbesondere a = b = 1.

18. Vorrichtung nach Anspruch 16 oder 17, dadurch gekennzeichnet, daß die Anzahl der Bits von besagter Zahl n im Bereich von 450 bis 570 liegt.

19. Vorrichtung nach einem der Ansprüche 16 bis 18, dadurch gekennzeichnet, daß Schritte j) bis l) und n) bis o) mit unterschiedlichen binären Zufallsvektoren v und/oder Zufallszahlen Ö, wobei t≧1 ist, t-mal wiederholt werden.

20. Vorrichtung nach Anspruch 19, dadurch gekennzeichnet, daß t einen Wert von mindestens t=4 aufweist.

21. Vorrichtung nach einem der Ansprüche 16 bis 21, dadurch gekennzeichnet, daß Schritte j) bis l) und n) bis o) unter Verwendung binärer oder trinärer logischer Signale ausgeführt werden.

## Revendications

1. Méthode de contrôle d'accès ou d'identification, (notamment dans un système de programmes de télévision payants), caractérisée en ce que pour autoriser un utilisateur ou un ensemble d'utilisateurs (désigné U), comme des cartes à mémoire (182), une autorité (11) calcule des données ID spécifiques à chaque U ou groupe de U et fournit à U les données cachées suivant lesdites données ID et ayant été calculé mod n, et en ce que pour vérifier l'identité de U, U échange au moins une partie desdites données cachées avec le vérificateur (désigné V), - lecteur de carte à mémoire (181) par exemple - qui vérifie la validité des données échangées sur une base mod n, où n est le produit d'au moins deux nombres premiers et caractérisé par les étapes d'authentification ci-après, réalisées dans une configuration utilisateur initiale :
a) ladite autorité combine lesdites données ID (63) avec un code public PK^{j} et un octet c de sorte que le nombre G combiné résultant possède une racine d-ième g mod n, c'est-à-dire G = g^{d} mod n, et en ce que chaque PK^{j} possède ε-racines mod n, désignées SKⱼ⁻¹ ;
b) au moins g et n sont enregistrés (25, 64) dans U,
et par les étapes de vérification ci-après :
c) U envoie au moins g à V ;
d) V calcule (34) G = g² mod n et sépare de G lesdites données ID et les valeurs de code public PK^{j};
e) U sélectionne un nombre aléatoire δ dans la plage (√n ± 1, n/2);
et calcule (24) une valeur E = δ^{ε} mod n et envoie la valeur E à V ;
f) V sélectionne un vecteur binaire aléatoire v = (v¹v²...v^{k}) et envoie ce vecteur à U ;
g) U calcule (24) 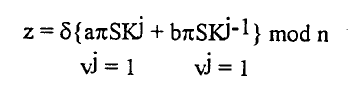
et envoie z à V ;
h) V vérifie (34) que 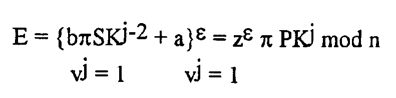
où ε = 2 ou ε = 3 et a et b sont des constantes, notamment a = b = 1

2. Méthode conforme à la Revendication 1, **caractérisée en ce que** ε > 2 et en ce que V reçoit, en plus, les valeurs SK^{j-2}, notamment par l'intermédiaire de U où ces valeurs ont été enregistrées.

3. Méthode conforme à la Revendication 1 ou 2, **caractérisée en ce que** dans l'Étape a) de la Revendication 1, ledit octet c est omis et la combinaison de ID et PK est permutée jusqu'à ce que G soit une puissance d-ième mod n.

4. Méthode conforme à une des quelconques Revendications 1 à 3, **caractérisée en ce que** d est une valeur d = 2 ou d = 3.

5. Méthode conforme à une des quelconques Revendications 1 à 4, **caractérisée en ce que** pour former G, ID et PK et/ou c sont combinés (63) pour donner ID&PK&c, où & désigne l'opérateur de concaténation.

6. Méthode conforme à une des quelconques Revendications 1 à 5, **caractérisée en ce que** ID est une constante.

7. Méthode conforme à une des quelconques Revendications 1 à 6, **caractérisée en ce que** l'exponentiation de g est remplacée par un calcul polynomial, où l'autorité utilise une séquence de nombres publics Ωi et calcule g de sorte que

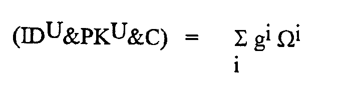

8. Méthode conforme à une des quelconques Revendications 1 à 7, **caractérisée en ce que** a et b sont des fonctions algébriques ou électroniques.

9. Méthode conforme à une des quelconques Revendications 1 à 8, **caractérisée en ce que** le nombre de bits dudit nombre n est compris dans la plage de 450 à 570.

10. Méthode conforme à une des quelconques Revendications 1 à 9, **caractérisée en ce que** U et V génèrent une valeur Ω, par exemple à partir dudit vecteur binaire aléatoire v et/ou dudit nombre aléatoire δ et/ou des données et/ou des nombres résultant des calculs précédant, et en ce que la Revendication 1, Étapes g) et h) est modifiée comme suit :
g) U calcule (24). 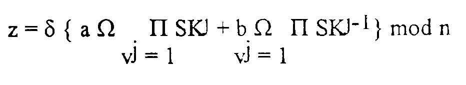 et envoie z à V ;
h) V vérifie (34) que

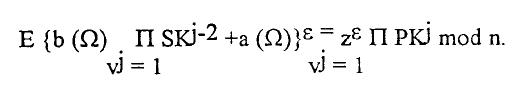

11. Méthode conforme à une des quelconques Revendications 1 à 10, **caractérisée en ce que** les Étapes e) à h) sont répétées t fois avec différents vecteurs binaires aléatoires v et/ou nombres aléatoires δ, t ≧ 1.

12. Méthode conforme à la Revendication 11, **caractérisée en ce que** t possède une valeur d'au moins t = 4.

13. Méthode conforme à une des quelconques Revendications 1 à 12 **caractérisée en ce qu**'un ensemble d'au moins k = 18 valeurs clés PK^{j} est utilisé.

14. Méthode conforme à une des quelconques Revendications 11 à 13, **caractérisée en ce que** le produit k*t est une valeur comprise dans la plage de 64 à 80.

15. Méthode conforme à une des quelconques Revendications 1 à 14, **caractérisée en ce que** lesdites Étapes e) à h) sont réalisées à l'aide de signaux logiques binaires ou trinaires.

16. Appareil de contrôle d'accès ou identification (en particulier dans un système à programmes de télévision payants) agissant comme un utilisateur U - carte à mémoire (182) par exemple - ayant été autorisé par une autorité (11) ayant calculé des données ID spécifiques à chaque U ou groupe de U et ayant fourni à U les données cachées en fonction desdites données ID calculées mod n, et en ce que pour vérifier l'identité de U, U échange au moins une partie desdites données cachées avec le vérificateur (désigna V) - lecteur de carte à mémoire (181) - qui vérifie la validité des données échangées sur une base mod n où n est le produit d'au moins deux nombres premiers, **caractérisé en ce que** lesdites données ID sont combinées avec un code public PKJ et un octet c de sorte que le nombre combiné résultant G possède une racine d-ième g mod n (c'est-à-dire G = g^{d} mod n) et en ce que chaque PK^{j} posséde des racines ε mod n,
dénotées SK^{j-1} et en ce que g et n au moins sont enregistrés dans la mémoire (25) dans U,
l'appareil intégrant également le moyen de calcul (24) et le moyen E/S (21) caractérisé en ce que pour vérifier :
i) U envoie via ledit moyen E/S au moins g à V ;
j) U sélectionne un nombre aléatoire δ dans la plage [√n +1,n/2) ; et calcule (24) une valeur E = δ^{ε} mod n et envoie via ledit moyen E/S la valeur E à V ;
k) U reçoit, via ledit moyen E/S, de V un vecteur binaire aléatoire v = (v¹v²...v^{k}) ;
l) U calcule (24) 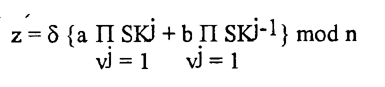
et envoie z via ledit moyen E/S à V,
où ε = 2 ou ε = 3 et a et b sont une constante, notamment a = b = 1.

17. Appareil de contrôle d'accès ou d'identification - en particulier dans un système de programmes de télévision payants - agissant comme un vérificateur V - par exemple, un lecteur de carte à mémoire (181) - qui vérifie l'identité d'un utilisateur - carte à mémoire (182), par exemple, ayant été autorisé par une autorité (11) ayant calculé les données ID spécifiques à chaque U ou groupe de U et ayant fourni à U les données cachées suivant lesdites données ID calculées mod n; et en ce que V et U échangent au moins une partie desdites données cachées et vérifient la validité des données échangées sur une base mod n, où n est le produit d'au moins deux nombres premiers, caractérisés en ce que lesdites données ID sont combinées avec un code public PK^{j} et un octet c de sorte que le nombre combiné résultant G possède une racine d-ième g mod n, et en ce que chaque PK^{j} possède des racines ε mod n, dénotées SK^{j-1}, et en ce qu'au moins n soit enregistré dans la mémoire (35) dans V,
l'appareil intégrant également un moyen de calcul (34) et un moyen E/S (31) caractérisé en ce que pour vérifier :
M) V reçoit, via ledit moyen E/S, au moins g de U et calcule (34) G = g² mod n et sépare de G lesdites données ID et les valeurs des codes publics PK^{j} ;
n) V reçoit de U, via ledit moyen E/S, une valeur E = δ^{ε} mod n, sélectionne un vecteur binaire aléatoire v = (v¹v²...v^{k}) et l'envoie via ledit moyen E/S à U ;
o) V reçoit de U via ledit moyen E/S : 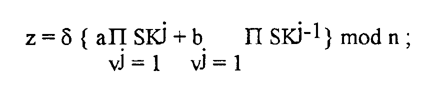 et vérifie que : 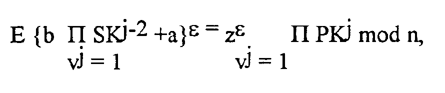
où ε = 2 ou ε = 3 et a et b sont une constante, en particulier a = b = 1.

18. Appareil conforme à la Revendication 16 ou 17, **caractérisé en ce que** le nombre de bits dudit nombre n est compris dans les limites de la plage 450 à 570.

19. Appareil conforme à une des quelconques Revendication 16 ou 18, **caractérisé en ce que** les Étapes j) à l) et n) à o) ont été répétées t fois avec différents vecteurs binaires aléatoires v et/ou nombres aléatoires δ, t ≧ 1.

20. Appareil conforme à la Revendication 19, **caractérisé en ce que** t possède une valeur d'au moins t = 4.

21. Appareil conforme aux Revendications 16 à 21, **caractérisé en ce que** les étapes j) à l) et n) à o) sont réalisées à l'aide de signaux logiques binaires ou trinaires.
